# EUROPEAN PATENT APPLICATION

(11) **EP 4 686 214 A1**
(43) Date of publication of application: **28.01.2026**
(21) Application number: 24774740.5
(22) Date of filing: 11.03.2024
(51) Int. Cl.: H04N 23/65, G06T 7/00, G06V 10/70, H04N 23/54

(54) **INFORMATION PROCESSING DEVICE, INFORMATION PROCESSING METHOD, SPAD IMAGING DEVICE, AI MODEL GENERATION METHOD, AI MODEL GENERATION DEVICE, AND INFERENCE PROCESSING DEVICE**

(30) Priority: 22.03.2023 JP 2023045685
(71) Applicant: Sony Semiconductor Solutions Corporation, Atsugi-shi, Kanagawa 243-0014 (JP)
(72) Inventor: KAMIYA, Takuro, Atsugi-shi, Kanagawa 243-0014 (JP); KUROKAWA, Tsubasa, Atsugi-shi, Kanagawa 243-0014 (JP)
(74) Representative: Müller Hoffmann & Partner
(86) International application number: PCT/JP2024/009272
(87) International publication number: WO 2024/195601

(57) **Abstract**

An information processing device according to the present technology includes a calculation unit that calculates a lower limit value of a length of a count period for making likelihood information equal to or greater than a threshold on the basis of an inference result obtained by inputting a plurality of SPAD images obtained by an SPAD sensor to an AI model obtained by machine learning, the SPAD images having different count values by varying lengths of the count period in which photon counting is performed for each pixel, and likelihood information of the inference result.

## Description

### TECHNICAL FIELD

The present technology relates to an information processing device, an information processing method, a SPAD imaging device, an AI model generation method, an AI model generation device, and an inference processing device related to a SPAD image obtained from a SPAD sensor.

### BACKGROUND ART

A technology of performing image analysis by performing inference using an AI model obtained by machine learning and analyzing a subject in an image has become widespread.

Utilization of an AI model is used in various fields, and for example, Patent Document 1 below is an example of using an AI model in agriculture. Specifically, an AI model is used for estimating a pinching target object in a pinching work of crops to enhance accuracy.

### CITATION LIST

### PATENT DOCUMENT

Patent Document 1: Japanese Patent No. 6964316

### SUMMARY OF THE INVENTION

### PROBLEMS TO BE SOLVED BY THE INVENTION

By the way, inference using an AI model tends to involve large power consumption. Furthermore, in a system that captures an input image to an AI model and inputs the input image to the AI model to perform image analysis, there is a problem that power consumption occurs in both imaging processing and inference processing.

The present technology has been made to solve such a problem, and an object thereof is to reduce power consumption when an AI model is used.

### SOLUTIONS TO PROBLEMS

An information processing device according to the present technology includes a calculation unit that calculates a lower limit value of a length of a count period for making likelihood information equal to or greater than a threshold on the basis of an inference result obtained by inputting a plurality of SPAD images obtained by an SPAD sensor to an AI model obtained by machine learning, the SPAD images having different count values by varying lengths of the count period in which photon counting is performed for each pixel, and likelihood information of the inference result.

In a SPAD pixel included in the SPAD sensor, recharging is performed after avalanche multiplication occurs due to incidence of photons. Power consumption in the SPAD sensor is substantially proportional to the number of times of the recharge operation.

Therefore, as the count period is shorter, the number of photons incident on the SPAD pixel decreases, and accordingly, the number of times of recharging also decreases, and power consumption related to SPAD image generation is reduced.

According to this configuration, a minimum count period during which a SPAD image for obtaining an appropriate inference result is obtained is calculated.

In an information processing method according to the present technology, an information processing device performs processing of calculating a lower limit value of a length of a count period for making likelihood information equal to or greater than a threshold on the basis of an inference result obtained by inputting, to an AI model obtained by machine learning, a plurality of SPAD images obtained by an SPAD sensor, the SPAD images having different count values by varying a length of the count period in which photon counting is performed for each pixel, and likelihood information of the inference result.

A SPAD imaging device according to the present technology includes: a SPAD sensor including a SPAD pixel; a storage unit that stores a lower limit value of a length of a count period calculated to make likelihood information equal to or greater than a threshold on the basis of an inference result obtained by inputting, to an AI model obtained by machine learning, a plurality of SPAD images having different count values by varying a length of the count period in which photon counting is performed for each SPAD pixel, and likelihood information of the inference result; a setting processing unit that sets the length of the count period for the SPAD sensor on the basis of the lower limit value; and an AI processing unit that obtains an inference result and likelihood information of the inference result by inputting the SPAD images obtained by the SPAD sensor to the AI model.

The above-described functions can also be obtained by such an information processing method or SPAD imaging device.

An information processing device according to the present technology includes: an AI processing unit that inputs a SPAD image obtained by a SPAD sensor to an AI model and obtains a plurality of types of inference results and likelihood information of the inference results; and a selection processing unit that selects an inference result of an output target from the plurality of inference results on the basis of a count period for the SPAD image input to the AI model, the count period being a count period in which photon counting for each pixel is performed.

The roughness of the SPAD image varies by varying the count period. According to the present configuration, even if the SPAD image whose count period is shortened in order to suppress power consumption is input to the AI model, an appropriate inference result is selected as an output target.

In an information processing method according to the present technology, an information processing device performs processing of inputting a SPAD image obtained by a SPAD sensor to an AI model and obtaining a plurality of types of inference results and likelihood information of the inference results; and processing of selecting an inference result of an output target from the plurality of inference results on the basis of a count period for the SPAD image input to the AI model, the count period being a count period in which photon counting for each pixel is performed.

The above-described functions can also be obtained by such an information processing method.

In an AI model generation method according to the present technology, an information processing device performs processing of generating an AI model by inputting a SPAD image obtained by a SPAD sensor as teacher data.

The SPAD image has lower power consumption at the time of generation than an image obtained by a CMOS sensor.

An AI model generation device according to the present technology includes an AI model generation unit that generates an AI model by inputting a SPAD image obtained by a SPAD sensor as teacher data.

The inference processing device according to the present technology includes an AI processing unit that obtains an inference result and likelihood information of the inference result by inputting a SPAD image to an AI model generated by inputting the SPAD image obtained by the SPAD sensor as teacher data.

The above-described functions can also be obtained by such AI model generation device and inference processing device.

### BRIEF DESCRIPTION OF DRAWINGS

Fig. 1 is a block diagram illustrating a configuration example of an inference system according to a first embodiment of the present technology.
Fig. 2 is an explanatory diagram of generation of a plurality of SPAD images.
Fig. 3 is a diagram illustrating an example of a unit SPAD image.
Fig. 4 is a diagram illustrating an example of a SPAD image obtained by setting a count period longer than that in Fig. 3.
Fig. 5 is a diagram for explaining a relationship between a length of a count period and likelihood of an inference result.
Fig. 6 is a diagram illustrating an example of calculating a lower limit value of a length of a count period for each task.
Fig. 7 is a diagram illustrating an example of an image displayed on a display unit in a second embodiment.
Fig. 8 is a flowchart illustrating an example of processing performed by a calculation device in the first embodiment.
Fig. 9 is a flowchart illustrating an example of processing performed by a SPAD imaging device in the first embodiment.
Fig. 10 is a block diagram illustrating a configuration example of an inference system according to the second embodiment of the present technology.
Fig. 11 is a diagram illustrating an example of an image displayed on a display unit in a second embodiment.
Fig. 12 is a flowchart illustrating an example of processing executed by an information processing device of an inference system in the second embodiment.
Fig. 13 is a diagram illustrating another example of an image displayed on a display unit in the second embodiment.
Fig. 14 is a block diagram illustrating a configuration example of an AI model generation device according to the present technology.
Fig. 15 is a flowchart illustrating an example of processing performed by the AI model generation device.
Fig. 16 is an example of an inference result and likelihood information displayed in a SPAD image having a relatively short count period.
Fig. 17 is an example of an inference result and likelihood information displayed in a SPAD image having a relatively long count period.

### MODE FOR CARRYING OUT THE INVENTION

Hereinafter, embodiments according to the present technology will be described in the following order with reference to the accompanying drawings.
<1. First Embodiment>
<1-1. Configuration of Inference System>
<1-2. Processing Flow>
<2. Second Embodiment>
<3. Method of Generating AI Model>
<4. Modifications>
<5. Summary>
<6. Present Technology>

### <1. First Embodiment>

An inference system 1 according to a first embodiment of the present technology will be described with reference to the accompanying drawings.

### <1-1. Configuration of Inference System>

The inference system 1 includes a single photon avalanche diode (SPAD) image generation device 2, a calculation device 3, and a SPAD imaging device 4.

The SPAD image generation device 2 is a device that generates a SPAD image obtained by performing imaging using a SPAD element.

The SPAD element detects incidence of light by detecting a large current generated by causing avalanche multiplication when light is incident. The SPAD element can detect incidence of one photon by adjusting a reverse bias voltage to increase sensitivity to light incidence.

In the SPAD element after photon detection, photon can be detected again by performing recharge operation.

As described above, in the SPAD element, the detection of one photon and the recharge operation are repeated.

In the SPAD sensor having the SPAD element for each two-dimensionally arranged pixel, one SPAD image is obtained by counting the number of times of photon detection for each pixel. The count value for the number of times of photon detection corresponds to luminance information.

Here, a period during which photons are detected is defined as a "count period Tc". The number of times of photon detection is proportional to the length of the count period Tc unless the imaging environment or the subject changes.

Note that the count period Tc corresponds to an exposure period in a complementary metal oxide semiconductor (CMOS) sensor.

The power consumption in the SPAD element is mainly due to the recharge operation described above. Therefore, the power consumption of the SPAD sensor can be reduced by shortening the count period Tc.

On the other hand, the power consumption in a conventional CMOS sensor mainly depends on the number of pixels and the frame rate. Therefore, in the CMOS sensor, it is difficult to reduce the power consumption even if the exposure time is shortened.

Furthermore, the time related to the avalanche multiplication and recharge operation in the SPAD element is set to a very high speed of several tens of ps to several hundreds of ps.

Therefore, the SPAD sensor has higher time resolution than the CMOS sensor.

Moreover, the information corresponding to the luminance value in the SPAD sensor is a count value of the number of times of photon detection and is digital data, and thus kTC noise does not exist. Therefore, in the SPAD image output from the SPAD sensor, image degradation due to kTC noise does not occur. That is, the SPAD image has lower noise than the image obtained by the CMOS sensor.

Furthermore, in the CMOS sensor, the time required for the processing of converting an analog signal into a digital signal depending on the amount of electric charge accumulated by photoelectric conversion becomes long. On the other hand, in the SPAD sensor, since the count value is already a digital value, there is no time for conversion into a digital signal, and luminance information can be read out at a higher speed than in the CMOS sensor.

The SPAD image generation device 2 generates a plurality of SPAD images having different lengths of the count period Tc. Therefore, the SPAD image generation device 2 includes an imaging unit 21 and an image processing unit 22.

The imaging unit 21 includes an imaging control unit 21a and a SPAD sensor 21b.

The imaging control unit 21a performs setting for the imaging operation of the SPAD sensor 21b. For example, the imaging control unit 21a sets the number of outputs of the SPAD image per unit time by setting the length of the count period Tc of the SPAD sensor 21b.

Note that, in this example, the length of the count period Tc is set to a short time such as 1.6 msec. As a result, the SPAD image output every 1.6 msec has a low count value and is an image having a larger ratio of noise components.

The SPAD image output every 1.6 msec is described as a "unit SPAD image Gu". Furthermore, a short count period Tc of 1.6 msec is set as a "unit count period Tcu".

The SPAD sensor 21b includes a pixel array unit in which pixels having SPAD elements are two-dimensionally arranged. Each pixel included in the SPAD sensor 21b includes a configuration for generating avalanche multiplication with respect to the SPAD element, a configuration for implementing recharge operation, and the like in addition to the SPAD element.

The image processing unit 22 integrates one or a plurality of the unit SPAD images Gu output for each unit count period Tcu set to 1.6 msec from the SPAD sensor 21b, thereby generating a plurality of SPAD images with different lengths of the count period Tc.

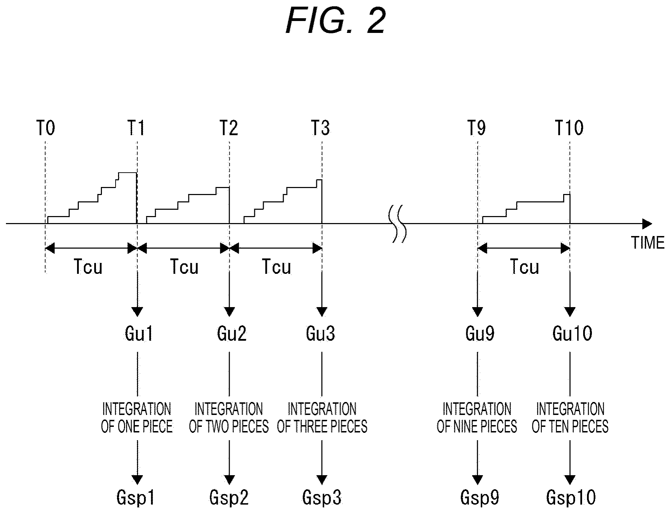

Generation of a plurality of SPAD images will be described with reference to Fig. 2.

From a start time T0 at which light reception by the SPAD element is started, the unit SPAD image Gu is output for each unit count period Tcu.

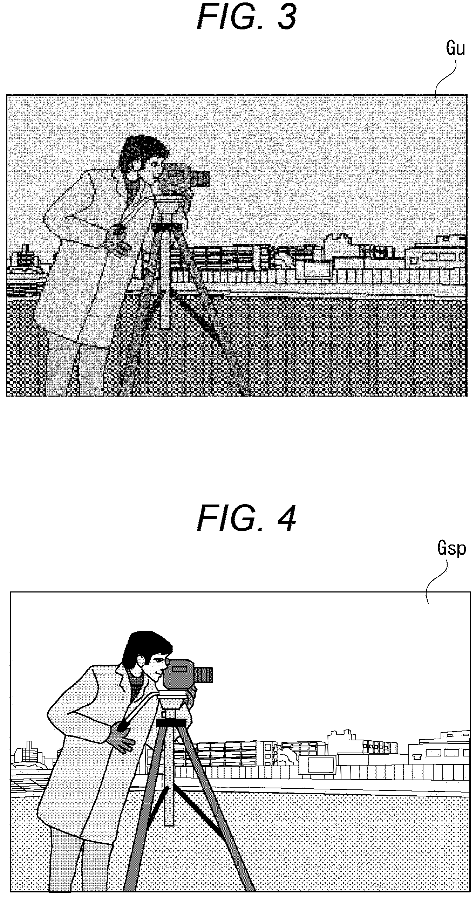

An example of the unit SPAD image Gu is illustrated in Fig. 3.

As illustrated in the drawing, the unit SPAD image Gu is an image with much noise.

The image processing unit 22 generates the SPAD image Gsp by integrating the unit SPAD images Gu output so far for each unit count period Tcu.

For example, at a time T1 when the unit count period Tcu has elapsed from the start time T0, the first unit SPAD image Gu1 is output. As the integration processing, the image processing unit 22 integrates only the unit SPAD image Gu1, which is the unit SPAD image Gu output so far, to generate a SPAD image Gsp1. That is, the SPAD image Gsp1 is the unit SPAD image Gu1 itself.

At a time T2 when the unit count period Tcu has further elapsed from the time T1, the second unit SPAD image Gu2 is output.

As the integration processing, the image processing unit 22 integrates the unit SPAD image Gu1 and the unit SPAD image Gu2 output so far to generate a SPAD image Gsp2.

In the integration processing, count values of the unit SPAD image Gu1 and the unit SPAD image Gu2 are added for each pixel.

The SPAD image Gsp2 corresponds to an image obtained by making the count period Tc twice longer than that of the SPAD image Gsp1.

As similar to this, at a time T3 when the unit count period Tcu has further elapsed from the time T2, the third unit SPAD image Gu3 is output.

As the integration processing, the image processing unit 22 integrates the unit SPAD image Gu1, the unit SPAD image Gu2, and the unit SPAD image Gu3 output so far to generate a SPAD image Gsp3.

Note that, in the integration processing here, the SPAD image Gsp2 and the unit SPAD image Gu3 calculated at the time T2 may be integrated instead of integrating the three unit SPAD images Gu.

The SPAD image Gsp3 corresponds to an image obtained by making the count period Tc three times longer than that of the SPAD image Gsp1.

As described above, a new SPAD image Gsp is generated by integrating the output unit SPAD images Gu for each unit count period Tcu.

That is, at a time T9, the ninth unit SPAD image Gu9 is output, and the SPAD image Gsp9 obtained by integrating the nine unit SPAD images Gu1,..., Gu9 output so far by the integration processing is generated.

Furthermore, at a time T10, the 10th unit SPAD image Gu10 is output, and a SPAD image Gsp10 obtained by integrating the 10 unit SPAD images Gu1,..., Gu10 output so far by the integration processing is generated.

An example of the SPAD image Gsp10 is illustrated in Fig. 4.

As illustrated in the drawing, the SPAD image Gsp10 is an image in which 10 unit SPAD images Gu are superimposed, and corresponds to an image obtained by making the count period Tc the longest. Since the count period Tc is long, the SPAD image Gsp10 is an image with less noise.

The plurality of types of SPAD images Gsp obtained in this manner are obtained by appropriately integrating the unit SPAD images Gu obtained for each unit count period Tcu continuously provided.

That is, by continuously providing the short-time unit count period Tcu, each unit SPAD image Gu is an image obtained by imaging substantially the same subject at substantially the same angle of view.

Therefore, even if the plurality of unit SPAD images Gu are integrated, the generated SPAD image Gsp is less blurred.

Note that, when inputting a plurality of SPAD images Gsp as teacher data to an artificial intelligence (AI) model, it is conceivable to give annotation information for each SPAD image Gsp as correct answer data.

However, in a case where a plurality of SPAD images Gsp having different lengths of the count period Tc are generated by the above-described method, if there is only annotation information for one SPAD image Gsp, the annotation information of the other SPAD images Gsp is the same and is unnecessary.

Therefore, a time required for preparing teacher data can be reduced.

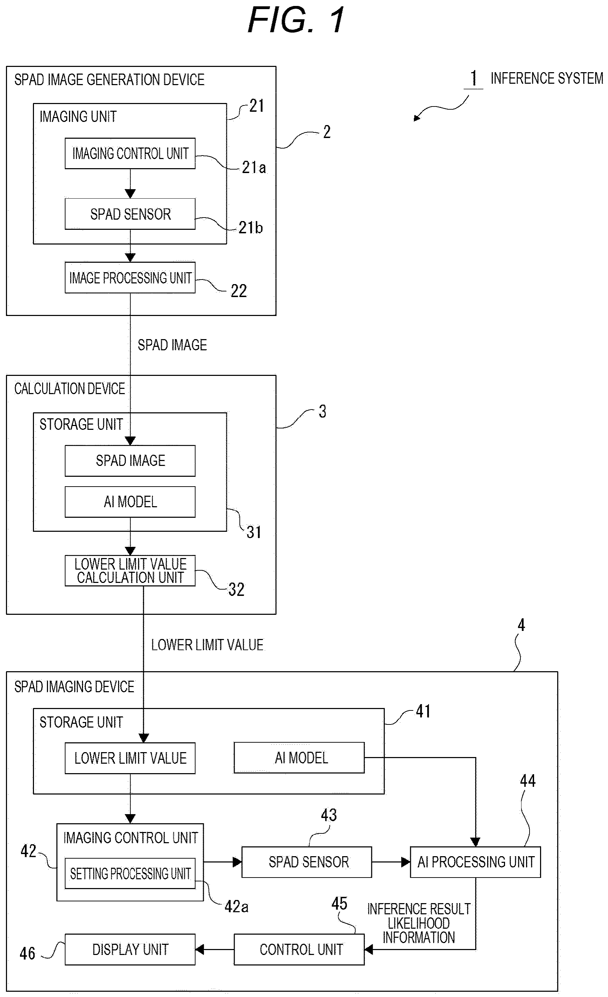

The plurality of SPAD images Gsp having different lengths of the count period Tc generated by the SPAD image generation device 2 are supplied to the calculation device 3 (see Fig. 1).

The calculation device 3 includes a storage unit 31 and a lower limit value calculation unit 32.

The storage unit 31 stores a plurality of SPAD images Gsp generated by the SPAD image generation device 2.

The storage unit 31 also stores an AI model that performs inference about the subject using the SPAD image Gsp (or the unit SPAD image Gu) as input data.

The lower limit value calculation unit 32 calculates the condition of the input data so that the performance of the inference processing performed by the AI model stored in the storage unit 31 satisfies a predetermined condition.

Specifically, the lower limit value calculation unit 32 in this example calculates a lower limit value Lv of the length of the count period Tc of the SPAD image Gsp as the input data such that the likelihood of the inference result output from the AI model is equal to or greater than a threshold Th.

That is, by inputting, to the AI model, the SPAD image Gsp captured with the count period Tc set so as to have a length equal to or longer than the lower limit value Lv calculated by the lower limit value calculation unit 32 as input data, it is possible to output, from the AI model, an inference result having a likelihood equal to or greater than a certain value.

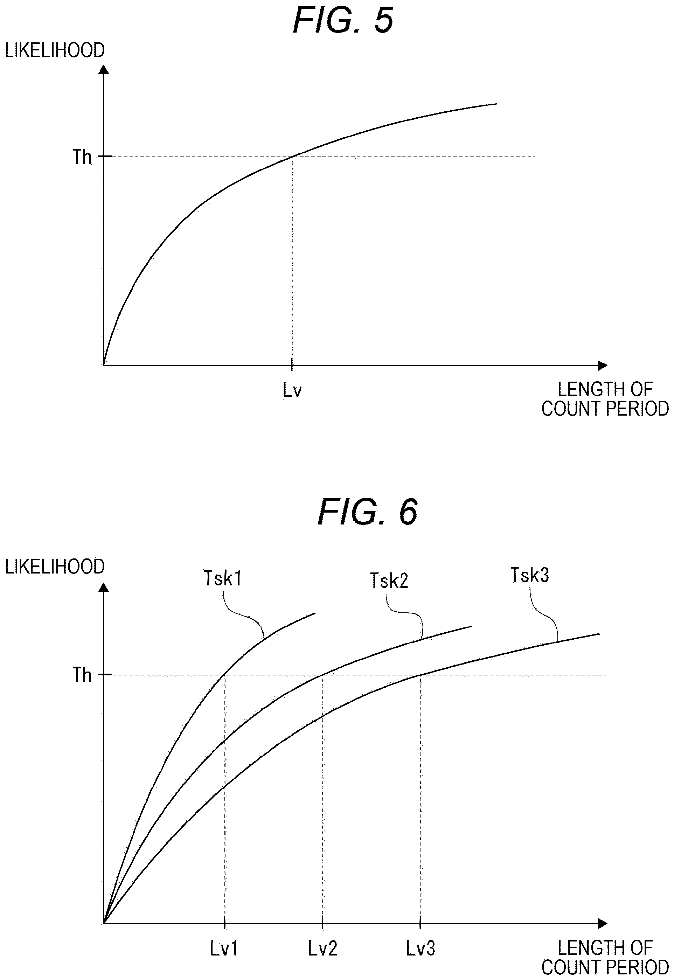

Fig. 5 illustrates a relationship between the length of the count period Tc of the SPAD image Gsp used as the input data and the likelihood of the inference result.

In Fig. 5, the horizontal axis represents the length of the count period Tc at the time of generating the SPAD image Gsp as input data to the AI model, and the vertical axis represents the likelihood of the inference result output from the AI model.

As illustrated in the drawing, the longer the count period Tc, the higher the likelihood of the inference result. Then, in a case where the length of the count period Tc is greater than or equal to the lower limit value Lv, the likelihood is greater than or equal to the threshold Th.

Note that the AI model may be capable of performing a plurality of tasks.

For example, the AI model may be capable of executing a first task Tsk1 for inferring the presence or absence of a person as a subject, a second task Tsk2 for inferring attributes such as gender and age of a person in a case where a person as a subject is present, and a third task Tsk3 for inferring an action of a person.

Furthermore, the first task Tsk1, the second task Tsk2, and the third task Tsk3 in this example have different difficulty levels of inference. Specifically, the first task Tsk1 is a task with the simplest inference, the second task Tsk2 is a task with the second simplest inference after the first task Tsk1, and the third task Tsk3 is a task with the most difficult inference.

Then, as illustrated in Fig. 6, the lower limit value Lv of the length of the count period Tc may be calculated for each task.

In the above-described example, the lower limit value calculation unit 32 calculates the lower limit value Lv1 for the first task Tsk1, the lower limit value Lv2 for the second task Tsk2, and the lower limit value Lv3 for the third task Tsk3. Then, the lower limit value Lv1 is a numerical value smaller than the lower limit value Lv2 and the lower limit value Lv3, the lower limit value Lv2 is a numerical value larger than the lower limit value Lv1, and the lower limit value Lv3 is a numerical value larger than the lower limit value Lv2.

That is, the simpler the task, the shorter the necessary length of the count period Tc.

Furthermore, the threshold Th may be different for each task. For example, the first task Tsk1 may be set to be higher than the threshold for the second task Tsk2 and the third task Tsk3.

The lower limit value Lv calculated by the lower limit value calculation unit 32 is supplied to the SPAD imaging device 4 (see Fig. 1).

The SPAD imaging device 4 is a camera device that captures the SPAD image Gsp and performs inference about a subject using an AI model stored therein.

The SPAD imaging device 4 includes a storage unit 41, an imaging control unit 42, a SPAD sensor 43, an AI processing unit 44, a control unit 45, and a display unit 46.

The storage unit 41 stores the same AI model as the AI model used for inference and stored in the storage unit 31 of the calculation device 3.

The storage unit 41 also stores the lower limit value Lv calculated by the calculation device 3.

The imaging control unit 42 controls the imaging operation of the SPAD sensor 43. Furthermore, the imaging control unit 42 includes a setting processing unit 42a that performs various settings regarding the imaging operation of the SPAD sensor 43.

The setting processing unit 42a performs processing of setting the length of the count period Tc of the SPAD sensor 43 to the above-described lower limit value Lv or more.

Furthermore, in a case where there is a plurality of tasks that can be executed by the AI model, for example, the count period Tc is set to be equal to or more than the lower limit value Lv according to the task selected by the user.

Note that it is conceivable that the user selects both the inference result as the first task Tsk1 and the inference result as the second task Tsk2 from the AI model so that the AI model simultaneously performs a plurality of tasks, for example.

In this case, the setting processing unit 42a sets the length of the count period Tc of the SPAD sensor 43 to be greater than or equal to the lower limit value Lv of the larger one of the lower limit value Lv1 calculated for the first task Tsk1 and the lower limit value Lv2 calculated for the second task Tsk2.

The SPAD sensor 43 has a similar configuration to that of the SPAD sensor 21b described above.

The AI processing unit 44 performs inference using the AI model stored in the storage unit 41 and the SPAD image Gsp output from the SPAD sensor 43, and obtains an inference result and likelihood information. The inference result and the likelihood information obtained in the AI processing unit 44 are output to the control unit 45.

The control unit 45 performs processing of displaying the inference result and the likelihood information supplied from the AI processing unit 44 on the display unit 46.

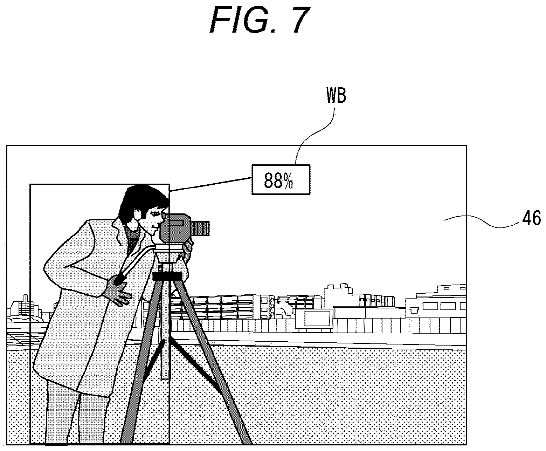

For example, as an inference result of the first task Tsk1 inferring the presence or absence of a person as a subject, a bounding box BB is superimposed on the through-the-lens image displayed on the display unit 46 (see Fig. 7). In the example illustrated in Fig. 7, a balloon WB including likelihood information is displayed for the bounding box BB.

Note that, although illustration of the connection line is omitted in Fig. 1, the control unit 45 implements the imaging operation by giving an instruction to the imaging control unit 42, and implements the inference processing using the AI model by giving an instruction to the AI processing unit 44. Note that each unit may operate regardless of an instruction from the control unit 45.

The display unit 46 is a monitor such as a liquid crystal display (LCD) or an organic electro-luminescence (EL) panel included in the SPAD imaging device 4. The display unit 46 included in the SPAD imaging device 4 is, for example, a back monitor provided on the back side (imaging person side) of a camera housing, an electric view finder (EVF) monitor provided in an EVF, or the like.

### <1-2. Processing Flow>

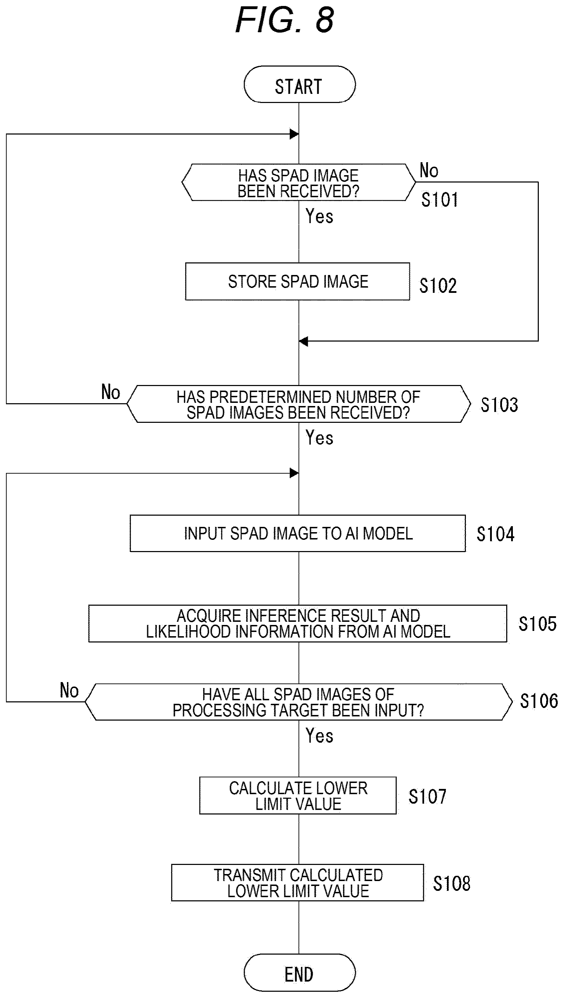

Fig. 8 illustrates an example of processing performed by the lower limit value calculation unit 32 of the calculation device 3 in the first embodiment.

First, the lower limit value calculation unit 32 of the calculation device 3 determines whether or not the SPAD image Gsp has been received from the SPAD image generation device 2 in step S101.

In a case where it is determined that the SPAD image Gsp has not been received, the lower limit value calculation unit 32 performs the processing of step S101 again.

In a case where it is determined that the SPAD image Gsp has been received, the lower limit value calculation unit 32 stores the received SPAD image Gsp in the storage unit 31 in step S102.

In step S103, the lower limit value calculation unit 32 determines whether or not a predetermined number of SPAD images Gsp have been received from the SPAD image generation device 2. In a case where the appropriate number of SPAD images Gsp for calculating the lower limit value Lv have not been obtained, the lower limit value calculation unit 32 returns to step S101 to prepare for reception of the SPAD images Gsp.

Note that all the predetermined number of SPAD images Gsp may not be received from the SPAD image generation device 2. For example, a part of the SPAD images Gsp may be SPAD images Gsp acquired previously, or may be SPAD images Gsp received from another device.

On the other hand, in a case where it is determined that the appropriate number of SPAD images Gsp for calculating the lower limit value Lv have been obtained, the lower limit value calculation unit 32 acquires the AI model stored in the storage unit 31 in step S104 and inputs the SPAD image Gsp as input data.

In step S105, the lower limit value calculation unit 32 acquires an inference result and likelihood information from the AI model.

The lower limit value calculation unit 32 determines whether or not all the SPAD images Gsp to be processed in step S106 have been input to the AI model as input data. In a case where it is determined that not all the SPAD images Gsp have been input, the lower limit value calculation unit 32 returns to the processing of step S104 again, and inputs the next SPAD image Gsp to the AI model.

On the other hand, in a case where it is determined that all the SPAD images Gsp to be processed have been input to the AI model as input data, the lower limit value calculation unit 32 calculates the lower limit value Lv in step S107.

Subsequently, the lower limit value calculation unit 32 transmits the lower limit value Lv calculated in step S107 to the SPAD imaging device 4 in step S108.

After finishing the processing of step S107, the lower limit value calculation unit 32 ends a series of processing illustrated in Fig. 8.

Note that the series of processing illustrated in Fig. 8 may be performed on the basis of a user's instruction, or may be performed with the reception of the SPAD image Gsp as a trigger.

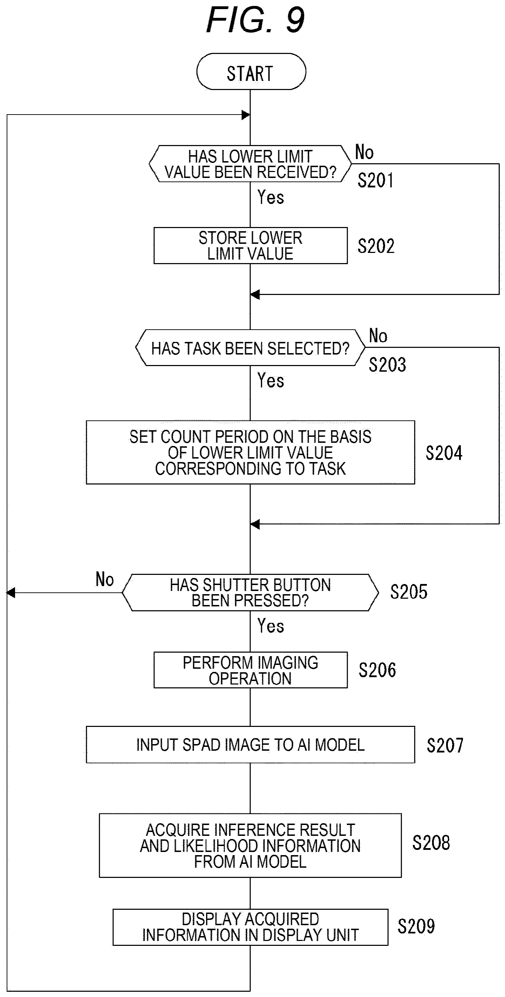

Next, an example of processing performed by the control unit 45 of the SPAD imaging device 4 in the first embodiment is illustrated in Fig. 9.

First, the control unit 45 of the SPAD imaging device 4 determines whether or not the lower limit value Lv has been received from the calculation device 3 in step S201.

In a case where it is determined that the lower limit value Lv has not been received, the control unit 45 proceeds to step S203 without performing the processing of step S202.

In a case where it is determined that the SPAD image Gsp has been received, the control unit 45 stores the lower limit value Lv received in step S201 in the storage unit 41 in step S202.

In step S203, the control unit 45 determines whether or not a task for the AI model has been selected by the user. Alternatively, in step S203, the control unit 45 may determine whether or not execution of inference processing by the AI model has been instructed by the user.

In a case where the operation of selecting the task has not been detected, the control unit 45 proceeds to step S205 without executing the processing of step S204.

In a case where it is determined that the operation of selecting the task has been detected, the control unit 45 causes the setting processing unit 42a to execute processing of setting the count period Tc on the basis of the lower limit value Lv corresponding to the task selected by the user in step S204.

The control unit 45 determines whether or not pressing of a shutter button by the user has been detected in step S205.

In a case where it is determined that the pressing of the shutter button has not been detected, the control unit 45 returns to the processing of step S201.

On the other hand, in a case where it is determined that the pressing of the shutter button has been detected, the control unit 45 causes the imaging control unit 42 to perform the imaging operation in step S206. As a result, an imaging operation is performed in the SPAD sensor 43, and the SPAD image Gsp is output.

The control unit 45 causes the AI processing unit 44 to perform processing of inputting the SPAD image Gsp output from the SPAD sensor 43 to the AI model as input data in step S207.

The control unit 45 causes the AI processing unit 44 to execute processing of acquiring an inference result and likelihood information from the AI model in step S208.

The control unit 45 receives the acquired information from the AI processing unit 44, and performs processing of displaying a display corresponding to the information on the display unit 46 in step S209.

After executing the processing of step S209, the control unit 45 returns to the processing of step S201 again.

### <2. Second Embodiment>

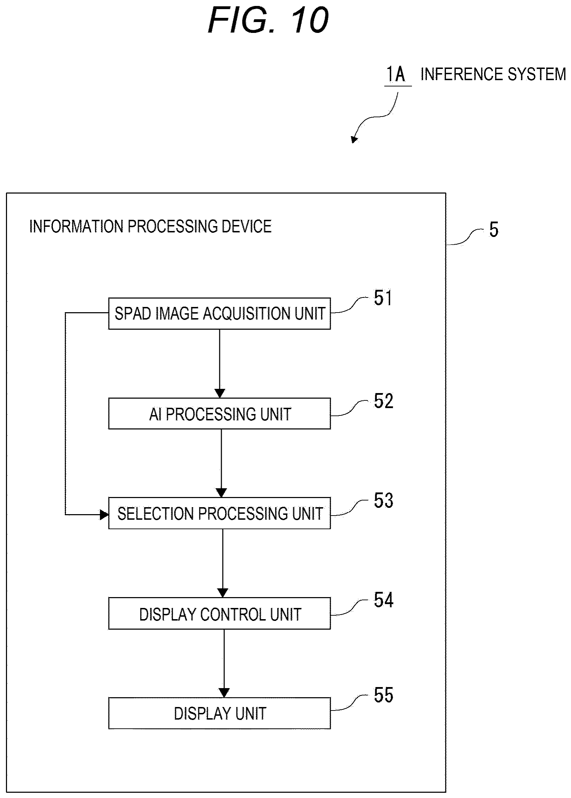

Fig. 10 illustrates a configuration of an inference system 1A according to a second embodiment. The inference system 1A acquires an inference result and likelihood information thereof by inputting the SPAD image Gsp to the AI model, and performs display control according to the inference result.

The inference system 1A includes an information processing device 5.

The information processing device 5 includes a SPAD image acquisition unit 51, an AI processing unit 52, a selection processing unit 53, a display control unit 54, and a display unit 55.

The SPAD image acquisition unit 51 acquires the SPAD image Gsp and supplies the SPAD image Gsp to the AI processing unit 52. The SPAD image Gsp may be acquired from another device capable of imaging the SPAD image Gsp, or may be acquired from another information processing device. Alternatively, the SPAD image acquisition unit 51 may be an imaging unit including a SPAD sensor including a SPAD element in each pixel, and the SPAD image acquisition unit 51 may acquire the SPAD image Gsp by performing an imaging operation by the SPAD sensor.

Furthermore, the SPAD image acquisition unit 51 acquires the length of the count period Tc used when the SPAD image Gsp is generated together with the SPAD image Gsp.

The AI processing unit 52 performs inference processing on the SPAD image Gsp as input data, and outputs an inference result and likelihood information.

The AI processing unit 52 in the present embodiment performs a plurality of types of tasks having different levels, thereby outputting an inference result for each task and likelihood information thereof.

The plurality of types of tasks at different levels includes a first task Tsk1 for inferring the presence or absence of a person as a subject, a second task Tsk2 for inferring attributes such as gender and age of a person in a case where a person as a subject is present, and a third task Tsk3 for inferring an action of a person, as described above. As the likelihood of the inference result is higher, the task is simpler and has a lower level.

The selection processing unit 53 selects an inference result of the output target from among a plurality of inference results for each task obtained by the AI processing unit 52. Furthermore, the selection processing unit 53 uses the length of the count period Tc supplied from the SPAD image acquisition unit 51 for this selection.

In other words, in a case of the inference result obtained for the SPAD image Gsp having the long count period Tc, not only the inference result of the task having low difficulty (for example, subject detection) but also the inference result of the task having high difficulty (for example, action inference) is determined to be the output target.

On the other hand, in a case of the inference result obtained for the SPAD image Gsp having a short count period Tc, only the inference result of the task having low difficulty is determined to be the output target.

The display control unit 54 performs processing of presenting the inference result of the output target selected by the selection processing unit 53 to the user. For example, in a case where the inference result of the output target is the inference result of the subject detection that is the first task Tsk1, the display control unit 54 superimposes the bounding box BB on the through-the-lens image displayed on the rear monitor as the display unit 55 as illustrated in Fig. 7 described above.

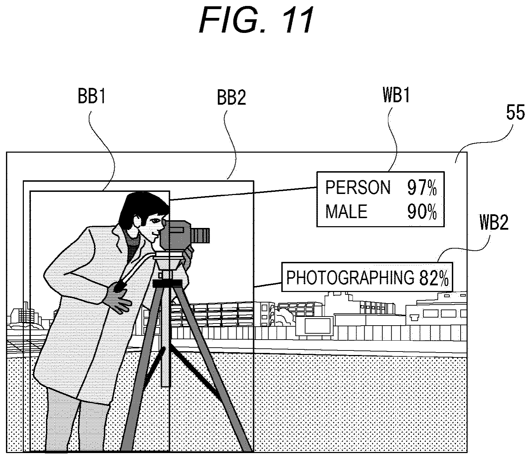

Furthermore, for example, in a case where the inference result of the output target is the inference result of the subject detection as the first task Tsk1, the inference result regarding the attributes such as the gender and the age of the person as the second task Tsk2, and the inference result of the action of the person as the third task Tsk3, the display control unit 54 displays the inference results of the first task Tsk1 and the second task Tsk2 as a first balloon WB1 with respect to the first bounding box BB1 and displays the inference result of the third task Tsk3 as a second balloon WB2 with respect to the second bounding box BB2 as illustrated in Fig. 11.

Each balloon WB includes not only the inference result but also likelihood information.

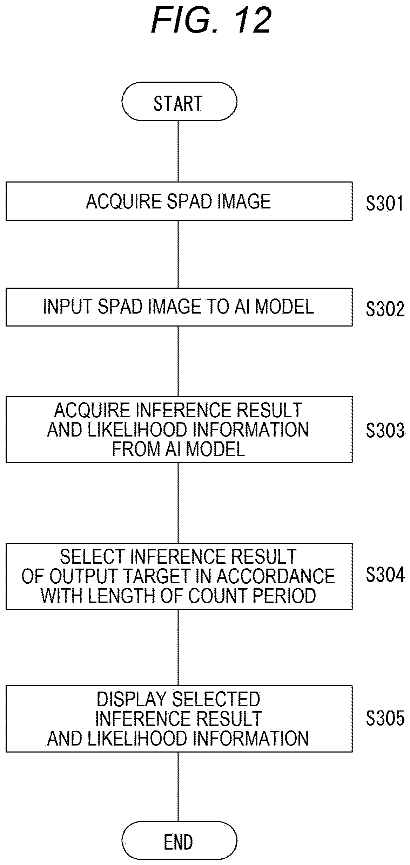

Fig. 12 illustrates an example of processing performed by the control unit in the information processing device 5 of the inference system 1A according to the present embodiment. Note that the control unit here refers to an arithmetic processing unit such as a central processing unit (CPU) for implementing the functions of the SPAD image acquisition unit 51, the AI processing unit 52, the selection processing unit 53, and the display control unit 54 included in the information processing device 5.

The control unit of the information processing device 5 acquires the SPAD image Gsp in step S301.

Subsequently, the control unit of the information processing device 5 inputs the SPAD image Gsp to the AI model in step S302.

In step S303, the control unit of the information processing device 5 acquires the inference result and the likelihood information from the AI model.

In step S304, the control unit of the information processing device 5 selects an inference result of the output target in accordance with the length of the count period Tc.

In step S305, the control unit of the information processing device 5 performs display control to display the selected inference result and likelihood information.

As a result, the display illustrated in Figs. 7 and 11 is performed.

Note that, as described above, in a case where the length of the count period Tc is used when the inference result output from the plurality of inference results for each task is selected, the AI model may not output the likelihood information.

As a result, the size of the AI model can be reduced.

Furthermore, by inputting the information on the length of the count period Tc together with the SPAD image Gsp to the AI model, the task of the inference processing performed by the AI model may be configured to be switched.

For example, in a case where the length of the relatively short count period Tc and the SPAD image Gsp are input to the AI model, in the AI model, the task to be performed may be limited to the first task Tsk1 described above, and then, the inference result and the likelihood information may be output.

As similar to this, in a case where the length of the relatively long count period Tc and the SPAD image Gsp are input to the AI model, in the AI model, the first task Tsk1, the second task Tsk2, and the third task Tsk3 described above may be performed for the SPAD image Gsp, and the inference result and the likelihood information may be output.

As a result, in a case where inference is performed on the SPAD image Gsp obtained in accordance with the short count period Tc, the operation amount in the AI model is reduced.

Therefore, power consumption in the information processing device 5 can be reduced.

Note that the display control unit 54 may perform inference processing not only for the inference result and the likelihood information regarding the task selected by the selection processing unit 53 but also for the task not selected, and cause the display unit 55 to display the inference result and the likelihood information.

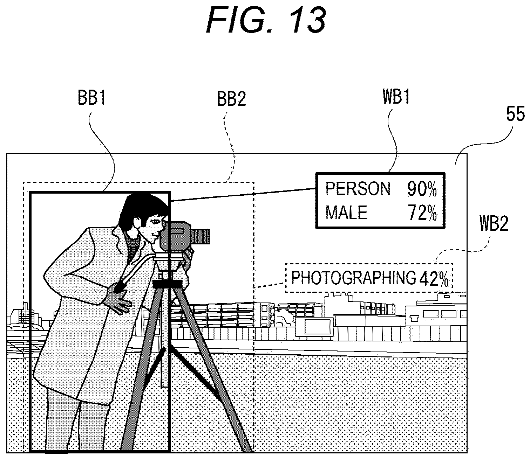

An example is illustrated in Fig. 13. In Fig. 13, three inference results and likelihood information are displayed as illustrated in Fig. 11. However, the inference result (photographing) and the likelihood information (42%) in the third task Tsk3 not selected by the selection processing unit 53 are displayed by the second bounding box BB2 and the second balloon WB2.

Then, in Fig. 13, the inference result and the likelihood information of the task selected by the selection processing unit 53 are indicated by thick lines, the inference result and the likelihood information of the not selected task are indicated by broken lines, and the like, and the selected task is made more conspicuous than the non-selected task.

### <3. Method of Generating AI Model>

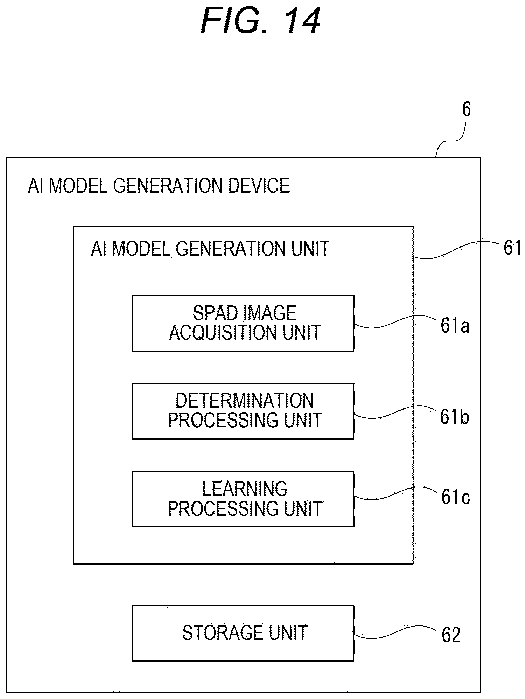

An example of a configuration of the AI model generation device 6 for generating the AI model is illustrated in Fig. 14.

The AI model generation device 6 includes an AI model generation unit 61 and a storage unit 62.

Furthermore, the AI model generation device 6 may further include an imaging unit or the like for generating the SPAD image Gsp as teacher data.

The AI model generation unit 61 functions as a SPAD image acquisition unit 61a, a determination processing unit 61b, and a learning processing unit 61c.

The SPAD image acquisition unit 61a acquires the SPAD image Gsp as teacher data used for generation of the AI model and stores the SPAD image Gsp in the storage unit 62. The SPAD image Gsp may be acquired from another device, or may be acquired from the imaging unit included in the AI model generation device 6 as described above.

The determination processing unit 61b performs, for example, processing of determining whether a predetermined number of SPAD images Gsp have been prepared, processing of determining whether or not the learned AI model satisfies predetermined performance, and the like.

The learning processing unit 61c acquires the SPAD image Gsp stored in the storage unit 62 as teacher data, and performs learning of the AI model by inputting the SPAD image Gsp to the AI model.

The learned AI model is stored in, for example, the storage unit 62.

As described above, the AI model used in the first embodiment and the second embodiment is generated by giving the SPAD image Gsp as teacher data.

Furthermore, the SPAD image Gsp is suitable as the input data of the AI model generated in this manner.

Furthermore, by using the SPAD image Gsp as the teacher data in the generation of the AI model, it is possible to reduce the power consumption related to the generation of the teacher data. That is, it is possible to reduce the total power consumption in the generation of the AI model including the generation of the teacher data.

Moreover, as described above, a plurality of SPAD images Gsp having different lengths of the count period Tc can be easily generated.

Therefore, the time required from the preparation of the teacher data to the generation of the AI model can be shortened.

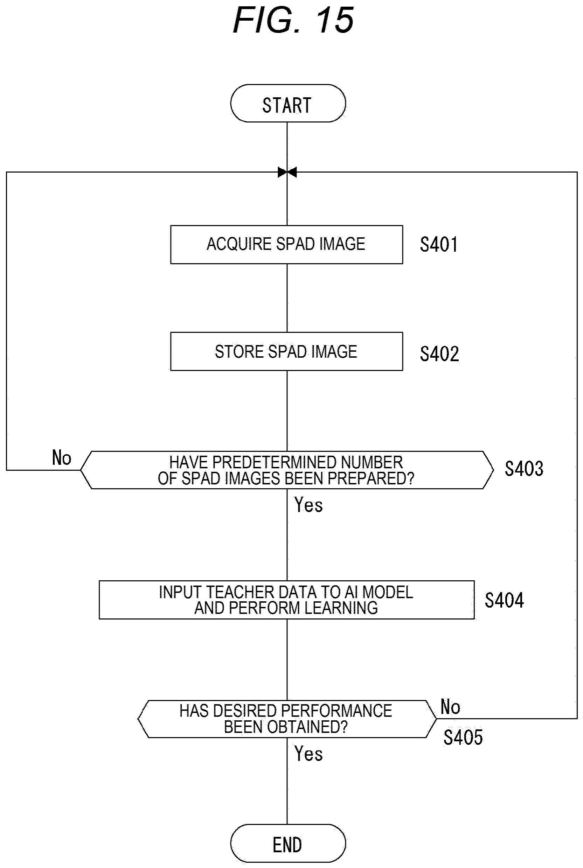

Fig. 15 illustrates an example of processing performed by the AI model generation unit 61 of the AI model generation device 6.

The AI model generation unit 61 acquires the SPAD image Gsp in step S401.

The AI model generation unit 61 stores the SPAD image Gsp acquired in step S401 in the storage unit 62 in step S402.

The AI model generation unit 61 determines whether or not a predetermined number of SPAD images Gsp have been prepared as teacher data in step S403. In a case where the number of pieces of teacher data is less than the predetermined number, the AI model generation unit 61 returns to step S401 again.

On the other hand, in a case where it is determined that the number of pieces of teacher data has reached the predetermined number, the AI model generation unit 61 learns the AI model by inputting the SPAD image Gsp as the prepared teacher data to the AI model in step S404.

The AI model generation unit 61 determines whether or not desired performance has been obtained for the learned AI model in step S405. This determination processing is performed, for example, by inputting an image serving as a reference to the learned AI model and determining whether or not an obtained inference result is correct and likelihood information is equal to or greater than a threshold.

Alternatively, in the determination processing in step S405, a plurality of test SPAD images Gsp may be input to obtain each inference result, and it may be determined whether or not the accuracy rate of the inference result is equal to or greater than a threshold.

In a case where it is determined that desired performance has not been obtained for the learned AI model, the AI model generation unit 61 returns to step S401 again and further additionally acquires learning data.

On the other hand, in a case where it is determined that desired performance is obtained, the AI model generation unit 61 ends the series of processing illustrated in Fig. 15.

At this time, the AI model generation unit 61 may separately store the learned AI model for which predetermined performance has been obtained in the storage unit 62.

### <4. Modifications>

In the above-described example, an example has been described in which the plurality of SPAD images Gsp having different count periods Tc is generated by continuously providing the unit count period Tcu, but the application of the present technology is not limited thereto.

For example, after the first SPAD image Gsp is generated with the count period Tc as the unit count period Tcu, the second SPAD image Gsp is generated by newly starting the count period Tc having a length twice the unit count period Tcu.

As described above, a plurality of SPAD images Gsp having different count periods Tc may be prepared.

The SPAD image generation device 2 and the SPAD imaging device 4 described above may be the same camera device. That is, a plurality of SPAD images Gsp having different lengths of the count period Tc may be prepared by the imaging operation using the SPAD element in the SPAD imaging device 4.

The AI processing unit 44 in the SPAD imaging device 4 described above may be provided inside the SPAD sensor 43. For example, the SPAD image Gsp, the inference result, and the likelihood information thereof may be output as a set from the SPAD sensor 43.

The inference result and the likelihood information output from the SPAD sensor 43 may be included in the metadata of the SPAD image Gsp. In a case where the inference result and the likelihood information are output as the metadata of the SPAD image Gsp, for example, the metadata may be included in line data in which embedded data is stored or may be included in a frame end packet header or a packet footer according to the standard of Mobile Industry Processor Interface (MIPI). Of course, the inference result and the likelihood information may be included as metadata in a part of the packet data for transmitting the SPAD image Gsp regardless of the MIPI standard.

Note that, in the example described above, in a case where the inference result and the likelihood information of the task selected by the selection processing unit 53 are indicated, an example in which the highest likelihood information is presented has been described, but the present invention is not limited thereto.

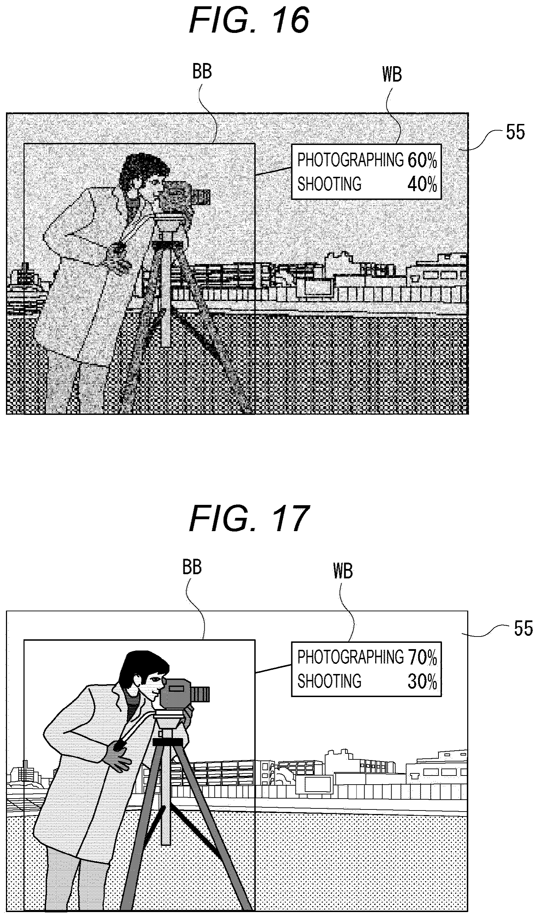

For example, Figs. 16 and 17 illustrate the inference result and the likelihood information in the third task Tsk3.

Fig. 16 illustrates the SPAD image Gsp obtained by relatively shortening the count period Tc, in which the inference result and the likelihood information are displayed by a balloon WB. In the balloon WB, an inference result (photographing) in which the likelihood information is set to 60% and an inference result (shooting) in which the likelihood information is set to 40% are displayed.

On the other hand, Fig. 17 illustrates the SPAD image Gsp obtained by making the count period Tc relatively long, in which the inference result and the likelihood information are displayed by a balloon WB. In the balloon WB, an inference result (photographing) in which the likelihood information is set to 70% and an inference result (shooting) in which the likelihood information is set to 30% are displayed.

### <5. Summary>

As described in the first embodiment, a calculation device 3 as an information processing device in the present technology includes a calculation unit (lower limit value calculation unit 32) that calculates a lower limit value Lv (Lv1, Lv2, Lv3) of a length of a count period Tc for making likelihood information equal to or greater than a threshold Th on the basis of an inference result obtained by inputting a plurality of SPAD images Gsp obtained by an SPAD sensor 21b to an AI model obtained by machine learning, the SPAD images Gsp having different count values by varying lengths of the count period Tc in which photon counting is performed for each pixel, and likelihood information of the inference result.

In a SPAD pixel included in the SPAD sensor 21b, recharging is performed after avalanche multiplication occurs due to incidence of photons. Power consumption in the SPAD sensor 21b is substantially proportional to the number of times of the recharge operation.

Therefore, as the count period Tc is shorter, the number of photons incident on the SPAD pixel decreases, and accordingly, the number of times of recharging also decreases, and power consumption related to generation of the SPAD image Gsp is reduced.

According to this configuration, a length of a minimum count period Tc during which a SPAD image Gsp for obtaining an appropriate inference result is obtained is calculated.

Therefore, the length of the count period Tc when the SPAD image Gsp to be input to the generated AI model is generated can be shortened to the calculated lower limit value Lv, and the power consumption of the inference system 1 using the AI model can be reduced.

Furthermore, as described with reference to Fig. 2 and the like, the SPAD image Gsp used in the calculation device 3 as the information processing device may be an image obtained by continuously providing the unit count period Tcu for photon counting and integrating at least one or more unit SPAD images Gu among the plurality of unit SPAD images Gu obtained for each unit count period Tcu, and the plurality of SPAD images Gsp having different lengths of the count period Tc may be obtained by changing the number of integrated pieces of the unit SPAD images Gu.

In order to calculate the lower limit value Lv (Lv1, Lv2, Lv3) of the length of the count period Tc, it is necessary to use a plurality of SPAD images Gsp obtained by applying the count periods Tc of various lengths as input images.

Then, the plurality of SPAD images Gsp desirably image the same subject at the same view angle.

The plurality of SPAD images Gsp obtained by this configuration are SPAD images Gsp obtained by imaging substantially the same subject at substantially the same view angle, and are SPAD images Gsp different only in the length of the count period Tc.

As a result, the inference result obtained by inputting the SPAD image Gsp with the longer count period Tc can be used as the correct data of the SPAD image Gsp captured using the count period Tc shorter than the count period Tc.

Therefore, appropriate learning by the AI model can be performed.

Furthermore, by imaging the SPAD image Gsp having a long count period Tc, the SPAD image Gsp having a count period Tc shorter than the count period Tc is obtained by reducing the number of integrated pieces. That is, it is not necessary to repeat the imaging operation for each SPAD image Gsp having a short count period Tc, and it is possible to shorten the time required to obtain a plurality of SPAD images Gsp and reduce the power consumption related to the imaging operation for obtaining the teacher data.

An information processing method in the present technology is, for example, an information processing method performed by a calculation device 3 as an information processing device, the information processing method including processing of calculating a lower limit value Lv (Lv1, Lv2, Lv3) of a length of a count period Tc for making likelihood information equal to or greater than a threshold Th on the basis of an inference result obtained by inputting, to an AI model obtained by machine learning, a plurality of SPAD images Gsp obtained by an SPAD sensor 21b, the SPAD images Gsp having different count values by varying a length of the count period Tc in which photon counting is performed for each pixel, and likelihood information of the inference result.

Furthermore, a SPAD imaging device 4 according to the present technology includes: a SPAD sensor 43 including a SPAD pixel; a storage unit 41 that stores a lower limit value Lv (Lv1, Lv2, Lv3) of a length of a count period Tc calculated to make likelihood information equal to or greater than a threshold Th on the basis of an inference result obtained by inputting, to an AI model obtained by machine learning, SPAD images Gsp having different count values by varying a length of the count period Tc in which photon counting is performed for each SPAD pixel, and likelihood information of the inference result; a setting processing unit 42a that sets the length of the count period Tc for the SPAD sensor on the basis of the lower limit value Lv; and an AI processing unit 44 that obtains an inference result and likelihood information of the inference result by inputting the SPAD image Gsp obtained by the SPAD sensor 43 to the AI model.

The above-described functions and effects can also be obtained by such an information processing method or SPAD imaging device 4.

As described in the second embodiment, an information processing device 5 includes: an AI processing unit 52 that inputs a SPAD image Gsp obtained by a SPAD sensor to an AI model and obtains a plurality of types of inference results and likelihood information of the inference results; and a selection processing unit 53 that selects an inference result of an output target from the plurality of inference results on the basis of a length of a count period Tc for the SPAD image Gsp input to the AI model, the count period Tc being a count period in which photon counting for each pixel is performed.

The roughness of the SPAD image Gsp varies by varying a length of the count period Tc. According to the present configuration, even if the SPAD image Gsp whose count period Tc is shortened in order to suppress power consumption is input to the AI model, an appropriate inference result is selected as an output target.

Therefore, it is not necessary to lengthen the count period Tc in order to obtain the inference result, and the power consumption can be reduced.

As described in the second embodiment, the information processing device 5 may include the display control unit 54 that displays the inference result selected by the selection processing unit 53.

As a result, the inference result selected by the selection processing unit 53 can be presented to the user.

As described in the second embodiment, the display control unit 54 of the information processing device 5 may display the likelihood information together with the inference result selected by the selection processing unit 53.

By presenting the likelihood information together with the inference result by the display control unit 54, the user can appropriately determine whether or not to trust the inference result on the basis of the likelihood information.

As described in the second embodiment, the display control unit 54 of the information processing device 5 may display the inference result not selected by the selection processing unit 53 together with the likelihood information.

For example, even in a case of an inference result in which the likelihood information is less than the threshold, presentation to the user together with the likelihood information can be useful information presentation for the user.

According to the present configuration, by displaying the non-selected inference result together with the likelihood information, it is preferable that the user himself/herself can determine whether or not to use the inference result.

An information processing method in the present technology is an information processing method performed by an information processing device 5, the information processing method including: processing of inputting a SPAD image Gsp obtained by a SPAD sensor to an AI model and obtaining a plurality of types of inference results and likelihood information of the inference results; and selecting an inference result of an output target from the plurality of inference results on the basis of a length of a count period Tc for the SPAD image Gsp input to the AI model, the count period Tc being a count period in which photon counting for each pixel is performed.

The above-described functions and effects can also be obtained by such an information processing method.

As described in the method of generating an AI model, an AI model generation method in the present technology is, for example, an AI model generation method performed by an AI model generation device 6 as an information processing device, and generates an AI model by inputting a SPAD image Gsp obtained by a SPAD sensor as teacher data.

The SPAD image Gsp has lower power consumption at the time of generation than an image obtained by a CMOS sensor.

By using the SPAD image Gsp as teacher data to be input to the AI model, it is possible to reduce power consumption related to generation of the AI model.

An AI model generation device 6 in the present technology includes an AI model generation unit 61 that generates an AI model by inputting a SPAD image Gsp obtained by a SPAD sensor as teacher data.

As described above, the inference processing device (the SPAD imaging device 4 in the inference system 1 or the information processing device 5 in the inference system 1A) in the present technology includes an AI processing unit 44(52) that obtains an inference result and likelihood information of the inference result by inputting a SPAD image Gsp to an AI model generated by inputting the SPAD image Gsp obtained by the SPAD sensor as teacher data.

With such an inference processing device, the above-described various functions and effects can be obtained.

Herein, in this specification, the processing performed by the computer according to the program is not necessarily required to be performed in chronological order along the order described as the flowchart. That is, the processing performed by the computer according to the program also includes processing executed in parallel or individually (for example, parallel processing or processing by an object).

Furthermore, the program may be processed by one computer (processor), or may be subjected to distributed processing by a plurality of computers. Moreover, the program may be transmitted to a remote computer to be executed.

Moreover, in the present description, a system means a set of a plurality of components (devices, modules (parts), and the like), and it does not matter whether or not all the components are in the same housing. Therefore, a plurality of devices accommodated in separate housings and connected via a network and one device in which a plurality of modules is accommodated in one housing are both systems.

Furthermore, for example, a configuration described as one device (or processing unit) may be divided and configured as a plurality of devices (or processing units). Conversely, configurations described above as a plurality of devices (or processing units) may be collectively configured as one device (or processing unit). Furthermore, a configuration other than the above-described configurations may be added to the configuration of each device (or each processing unit). Moreover, if the configuration and operation as the entire system are substantially the same, a part of the configuration of a certain device (or processing unit) may be included in the configuration of another device (or another processing unit).

Furthermore, for example, the present technology can have a configuration of cloud computing in which one function is shared and processed by a plurality of devices in cooperation via a network.

Furthermore, for example, the program described above can be executed by any device. In this case, the device is only required to have a necessary function (functional block or the like) and obtain necessary information.

Furthermore, for example, each step described in the above-described flowchart can be executed by one device or can be shared and executed by a plurality of devices. Moreover, in a case where a plurality of processing is included in one step, the plurality of processing included in the one step can be executed by one device or can be shared and executed by a plurality of devices. In other words, a plurality of processing included in one step can also be executed as processing of a plurality of steps. Conversely, the processing described as a plurality of steps can be collectively executed as one step.

Note that, in the program executed by the computer, processing of steps describing the program may be executed in time series in the order described in the present specification, or may be executed in parallel or individually at necessary timing such as when a call is made. That is, as long as there is no contradiction, the processing of each step may be executed in an order different from the above-described order. Moreover, the processing of steps describing this program may be executed in parallel with the processing of another program, or may be executed in combination with the processing of another program.

Note that, the plurality of present technologies that has been described in the present specification can each be implemented independently as a single entity as long as there is no contradiction. Of course, a plurality of arbitrary present technologies can be implemented in combination. For example, a part or all of the present technologies described in any of the embodiments can be implemented in combination with a part or all of the present technologies described in other embodiments. Furthermore, a part or all of any of the above-described present technology can be implemented together with another technology that is not described above.

### <6. Present Technology>

Note that the present technology can also have the following configurations.
(1) An information processing device including:
   a calculation unit that calculates a lower limit value of a length of a count period for making likelihood information equal to or greater than a threshold on the basis of an inference result obtained by inputting a plurality of SPAD images obtained by an SPAD sensor to an AI model obtained by machine learning, the SPAD images having different count values by varying lengths of the count period in which photon counting is performed for each pixel, and likelihood information of the inference result.
(2) The information processing device according to (1) described above,
   in which the SPAD images are images obtained by continuously providing a unit count period for photon counting and integrating at least one or more unit SPAD images among the plurality of unit SPAD images obtained for each unit count period, and
   the plurality of SPAD images having different lengths of the count period is obtained by changing the number of integrated pieces of the unit SPAD images.
(3) An information processing method,
   in which an information processing device performs processing of calculating a lower limit value of a length of a count period for making likelihood information equal to or greater than a threshold on the basis of an inference result obtained by inputting, to an AI model obtained by machine learning, a plurality of SPAD images obtained by an SPAD sensor, the SPAD images having different count values by varying a length of the count period in which photon counting is performed for each pixel, and likelihood information of the inference result.
(4) A SPAD imaging device including:
   a SPAD sensor including a SPAD pixel;
   a storage unit that stores a lower limit value of a length of a count period calculated to make likelihood information equal to or greater than a threshold on the basis of an inference result obtained by inputting, to an AI model obtained by machine learning, a plurality of SPAD images having different count values by varying a length of the count period in which photon counting is performed for each SPAD pixel, and likelihood information of the inference result;
   a setting processing unit that sets the length of the count period for the SPAD sensor on the basis of the lower limit value; and
   an AI processing unit that obtains an inference result and likelihood information of the inference result by inputting the SPAD images obtained by the SPAD sensor to the AI model.
(5) An information processing device including:
   an AI processing unit that inputs a SPAD image obtained by a SPAD sensor to an AI model and obtains a plurality of types of inference results and likelihood information of the inference results; and
   a selection processing unit that selects an inference result of an output target from the plurality of inference results on the basis of a length of a count period for the SPAD image input to the AI model, the count period being a count period in which photon counting for each pixel is performed.
(6) The information processing device according to (5) described above, further including
   a display control unit that displays the inference result selected by the selection processing unit.
(7) The information processing device according to (6) described above,
   in which the display control unit displays the likelihood information together with the inference result selected by the selection processing unit.
(8) The information processing device according to any one of (6) and (7) described above,
   in which the display control unit displays the inference result not selected by the selection processing unit together with the likelihood information.
(9) An information processing method,
   in which an information processing device performs:
   processing of inputting a SPAD image obtained by a SPAD sensor to an AI model and obtaining a plurality of types of inference results and likelihood information of the inference results; and
   processing of selecting an inference result of an output target from the plurality of inference results on the basis of a length of a count period for the SPAD image input to the AI model, the count period being a count period in which photon counting for each pixel is performed.
(10) An AI model generation method,
   in which an information processing device performs processing of generating an AI model by inputting a SPAD image obtained by a SPAD sensor as teacher data.
(11) An AI model generation device including
   an AI model generation unit that generates an AI model by inputting a SPAD image obtained by a SPAD sensor as teacher data.
(12) An inference processing device including
   an AI processing unit that obtains an inference result and likelihood information of the inference result by inputting a SPAD image to an AI model generated by inputting the SPAD image obtained by a SPAD sensor as teacher data.

### REFERENCE SIGNS LIST

- 3: Calculation device (information processing device)
- 4: SPAD imaging device (inference processing device)
- 5: Information processing device (inference processing device)
- 6: AI model generation device
- 21b: SPAD sensor
- 32: Lower limit value calculation unit (calculation unit)
- 41: Storage unit
- 42a: Setting processing unit
- 43: SPAD sensor
- 44: AI processing unit
- 52: AI processing unit
- 53: Selection processing unit
- 54: Display control unit
- 61: AI model generation unit
- Gsp: SPAD image
- Gu: Unit SPAD image
- Lv, Lv1, Lv2, Lv3: Lower limit value
- Tc: Count period
- Tcu: Unit count period
- Th: Threshold

## Claims

1. An information processing device comprising:
a calculation unit that calculates a lower limit value of a length of a count period for making likelihood information equal to or greater than a threshold on a basis of an inference result obtained by inputting a plurality of SPAD images obtained by an SPAD sensor to an AI model obtained by machine learning, the SPAD images having different count values by varying lengths of the count period in which photon counting is performed for each pixel, and likelihood information of the inference result.

2. The information processing device according to claim 1,
wherein the SPAD images are images obtained by continuously providing a unit count period for photon counting and integrating at least one or more of unit SPAD images among the plurality of unit SPAD images obtained for each unit count period, and
the plurality of SPAD images having different lengths of the count period is obtained by changing the number of integrated pieces of the unit SPAD images.

3. An information processing method,
wherein an information processing device performs processing of calculating a lower limit value of a length of a count period for making likelihood information equal to or greater than a threshold on a basis of an inference result obtained by inputting, to an AI model obtained by machine learning, a plurality of SPAD images obtained by an SPAD sensor, the SPAD images having different count values by varying a length of the count period in which photon counting is performed for each pixel, and likelihood information of the inference result.

4. A SPAD imaging device comprising:
a SPAD sensor including a SPAD pixel;
a storage unit that stores a lower limit value of a length of a count period calculated to make likelihood information equal to or greater than a threshold on a basis of an inference result obtained by inputting, to an AI model obtained by machine learning, a plurality of SPAD images having different count values by varying a length of the count period in which photon counting is performed for each SPAD pixel, and likelihood information of the inference result;
a setting processing unit that sets the length of the count period for the SPAD sensor on a basis of the lower limit value; and
an AI processing unit that obtains an inference result and likelihood information of the inference result by inputting the SPAD images obtained by the SPAD sensor to the AI model.

5. An information processing device comprising:
an AI processing unit that inputs a SPAD image obtained by a SPAD sensor to an AI model and obtains a plurality of types of inference results and likelihood information of the inference results; and
a selection processing unit that selects an inference result of an output target from the plurality of inference results on a basis of a length of a count period for the SPAD image input to the AI model, the count period being a count period in which photon counting for each pixel is performed.

6. The information processing device according to claim 5, further comprising
a display control unit that displays the inference result selected by the selection processing unit.

7. The information processing device according to claim 6,
wherein the display control unit displays the likelihood information together with the inference result selected by the selection processing unit.

8. The information processing device according to claim 6,
wherein the display control unit displays the inference result not selected by the selection processing unit together with the likelihood information.

9. An information processing method,
wherein an information processing device performs:
processing of inputting a SPAD image obtained by a SPAD sensor to an AI model and obtaining a plurality of types of inference results and likelihood information of the inference results; and
processing of selecting an inference result of an output target from the plurality of inference results on a basis of a length of a count period for the SPAD image input to the AI model, the count period being a count period in which photon counting for each pixel is performed.

10. An AI model generation method,
wherein an information processing device performs processing of generating an AI model by inputting a SPAD image obtained by a SPAD sensor as teacher data.

11. An AI model generation device comprising
an AI model generation unit that generates an AI model by inputting a SPAD image obtained by a SPAD sensor as teacher data.

12. An inference processing device comprising
an AI processing unit that obtains an inference result and likelihood information of the inference result by inputting a SPAD image to an AI model generated by inputting the SPAD image obtained by a SPAD sensor as teacher data.
